# EUROPÄISCHE PATENTSCHRIFT

(11) **EP 2 209 753 B1**
(45) Veröffentlichungstag und Bekanntmachung des Hinweises auf die Patenterteilung: **31.10.2012**
(21) Anmeldenummer: 08848764.0
(22) Anmeldetag: 14.11.2008
(51) Int. Cl.: C10B 47/44, C01C 3/18, C04B 35/56, C04B 35/622, C10B 53/07, C01B 31/32

(54) **VERFAHREN ZUR TECHNISCHEN HERSTELLUNG VON CALCIUMCARBID IM ELEKTRONIEDERSCHACHTOFEN**
METHOD FOR THE PRODUCTION OF CALCIUM CARBIDE ON AN INDUSTRIAL SCALE IN AN ELECTRIC LOW-SHAFT FURNACE
PROCÉDÉ DE FABRICATION INDUSTRIELLE DE CARBURE DE CALCIUM DANS DES FOURS ÉLECTRIQUES À CUVE BASSE

(30) Priorität: 14.11.2007 DE 102007054343
(43) Veröffentlichungstag der Anmeldung: 28.07.2010
(73) Patentinhaber: AlzChem AG, 83308 Trostberg (DE)
(72) Erfinder: WEIGAND, Maren, 83093 Bad Endorf (DE); BAUMANN, Leonhard, D-94501 Aldersbach (DE); WIENEKE, Michael, 83308 Trostberg (DE); MÖLLER, Roland, D-38667 Bad Harzburg (DE)
(74) Vertreter: Böhm, Brigitte
(86) Internationale Anmeldenummer: PCT/EP2008/009668
(87) Internationale Veröffentlichungsnummer: WO 2009/062741

(56) Entgegenhaltungen:
- DE-A1- 4 339 403
- DE-A1- 4 428 305
- DE-A1-102006 023 259

## Beschreibung

Gegenstand der vorliegenden Erfindung ist ein Verfahren zur technischen Herstellung von Calciumcarbid im Elektroniederschachtofen, wobei PVC-haltige Kunststoffabfälle als Rohstoff eingesetzt werden.

Calciumcarbid stellt eine wichtige chemische Grundchemikalie dar, die beispielsweise zur Herstellung von Kalkstickstoff, NCN-Derivaten, Acetylengas sowie Acetylen-Folgeprodukten und in den letzten Jahrzehnten insbesondere als Entschwefelungsmittel in der Eisen- und Stahlindustrie verwendet wird.

Die großtechnische Herstellung von Calciumcarbid erfolgt heute üblicherweise in Elektroniederschachtöfen und zwar vorzugsweise in geschlossenen Öfen, welche mit Söderberg-Elektroden ausgestattet sind. Dieses elektrothermische Verfahren ist sehr kostenintensiv, weil für die Erzeugung der erforderlichen Reaktionstemperatur von 1.800 bis 2.300 °C und insbesondere von 2.000 bis 2.300 °C große Strommengen erforderlich sind. Außerdem werden an die Reinheit und Teilchengröße der Ausgangsstoffe, bestehend aus Branntkalk und Schwarzstoffen, wie z.B. Koks oder Anthrazit, hohe Anforderungen gestellt.

Die Mischung aus kleinstückigem Branntkalk und Koks (wie z. B. Steinkohlenkoks, Braunkohlenkoks) werden in einem Mischungsverhältnis von 60 : 40 Gew.-% und mit einer Teilchengröße von ca. 5 bis 80 mm mit Hilfe spezieller Beschickungssysteme in den Ofen eingebracht. Anschließend findet die Umsetzung dieser Rohstoffmischung (Möller) zum Calciumcarbid statt, wobei die erforderlichen Reaktionstemperaturen durch den über die Söderberg-Elektroden zugeführten Strom erzeugt werden.

Bei diesen großtechnischen Prozessen wird Calciumcarbid mit einem Carbidgehalt zwischen 75 und 80 % und Carbidofengas mit ca. 60 bis 80 Vol-% Kohlenmonoxid und ca. 10 bis 30 Vol-% Wasserstoff erzeugt. Die Zusammensetzung des Ofengases hängt hierbei sehr stark von der Art der eingesetzten Kohlenstoff-Komponenten (Schwarzstoffe) ab. Das durch den Schmelzprozess erzeugte, bevorzugt flüssige, Calciumcarbid wird über Abstiche aus dem Carbidofen mit Temperaturen von ca. 1.900 °C abgezogen, abgekühlt, gebrochen und anschließend in die Carbidflaschen abgefüllt, die üblicherweise als Transportgebinde für das Calciumcarbid dienen.

Die beim Calciumcarbid-Prozess entstehenden Gase, nämlich Kohlenmonoxid und Wasserstoff, können sowohl stofflich als auch thermisch in nachgeschalteten Prozessen verwendet werden.

In der Vergangenheit ist immer wieder versucht worden, den spezifischen Energieverbrauch des Calciumcarbid-Prozesses in Elektroniederschachtöfen zu senken und/oder auf der Rohstoffseite Kosten einzusparen.

Ein möglicher Lösungsweg bestand darin, die Ausgangskomponenten für die Calciumcarbid-Erzeugung in verdichteter Form einzusetzen, wobei die entsprechenden Formkörper aus den Reaktionspartnern Branntkalk und Koks im geforderten stöchiometrischen Verhältnis bestanden. Derartige Presslinge bzw. Briketts entsprechend der deutschen Patentschrift DE 123 185 zeichnen sich durch besonders günstiges Reaktionsverhalten und einem hohen spezifischen elektrischen Widerstand aus.

Ein anderer Weg bestand im Wesentlichen darin, nur ausgewählte oder speziell vorbehandelte Schwarzstoffe für die Calciumcarbid-Produktion einzusetzen, wobei das besondere Interesse an Kohlenstoffträger mit möglichst geringer spezifischen elektrischer Leitfähigkeit und einem möglichst niedrigem Gehalt an flüchtigen Bestandteilen galt. So wurden beispielsweise entsprechend dem DD-Patentschriften 139 948, 132 977 sowie 295 334 speziell vorbehandelte Koks-Sorten empfohlen.

Des Weiteren ist es auch aus der DE-PS 30 13 726 bekannt, anstelle von Koks billigere Schwarzstoffe, wie z. B. Anthrazit, Petrolkoks oder Magerkohle heranzuziehen. Nachteilig bei diesen Schwarzstoffen ist jedoch die Tatsache, dass diese wegen des hohen Anteils an flüchtigen Stoffen vorher calciniert werden müssen, was eine zusätzliche Vorbehandlung erforderlich macht und wodurch sich die Rohstoffkosten wieder verteuern.

Außerdem können diese Schwarzstoffe mit einem hohen Anteil an flüchtigen Stoffen nur in begrenztem Umfang im großtechnischen Prozess als Grobmöller verwendet werden.

Des Weiteren ist es beispielsweise aus den deutschen Offenlegungsschriften DE-OS 42 41 246, DE-OS 42 41 245 sowie DE-OS 42 41 244 bekannt, als Kohlenstoff-Komponente zerkleinerte Kunststoffabfälle einzusetzen, die jedoch noch einer speziellen Vorbehandlung bedürfen. So werden gemäß der DE-OS 42 41 246 die zerkleinerten Kunststoffabfälle in Gegenwart von feinteiligem Calciumoxid bei Temperaturen von 600 bis 1.400 °C in einem Kammerofen verkokt. Gemäß der DE-OS 42 41 244 bzw. DE-OS 42 41 245 werden die zerkleinerten Kunststoffabfälle in Gegenwart von feinteiligem Calciumoxid durch Pyrolyse bei 400 bis 800 °C und anschließend durch Calcinierung des entstehenden Calciumoxid-/Pyrolysekoks-Gemisches bei 1.000 bis 1.300 °C im Drehrohrofen vorab aufbereitet. Entsprechend der DE-OS 42 41 243 werden ebenfalls zerkleinerte Kunststoffabfälle als Kohlenstoff-Komponente empfohlen. Hierzu werden die zerkleinerten Kunststoffabfälle zuerst bei 600 bis 1.000 °C pyrolysiert, anschließend das Pyrolysegas bei 1.200 bis 1.900 °C teilverbrannt und schließlich das Ruß-/Gasgemisch auf 450 bis 800 °C abgekühlt sowie der Ruß auf feinteiligem und/oder stückigem Calciumoxid abgeschieden.

Nachteilig bei diesen Kohlenstoff-Komponenten ist wiederum die Tatsache, dass die Herstellung dieser Kohlenstoff-komponenten relativ kostspielig ist, so dass sich diese Verfahren im großtechnischen Prozess nicht durchsetzen konnten.

Schließlich wird in der unveröffentlichten deutschen Patentanmeldung DE 10 2006 023 259.3 ein Verfahren zur Herstellung von Calciumcarbid beschrieben, wobei Kunststoff-haltige Rest- und/oder Abfallstoffe direkt als Einsatzmaterialien neben Kalk und den üblichen Schwarzstoffen eingesetzt werden. Überraschenderweise wurde hierbei festgestellt, dass die entsprechenden Rest- und/oder Abfallstoffe trotz ihrer starken Verunreinigungen (wie z. B. hohen Halogenanteilen) weitgehend problemlos als Schwarzstoff-Komponente eingesetzt werden können.

Es hat sich allerdings gezeigt, dass PVC-haltige Kunststoffabfälle nur in begrenztem Umfang verwendet werden können, da das entstehende Chlorwasserstoffgas in größeren Mengen sich störend beim Calciumcarbid-Prozess auswirkt.

Der vorliegenden Erfindung lag daher die Aufgabe zugrunde, ein Verfahren zur technischen Herstellung von Calciumcarbid im Elektroniederschachtofen mit Hilfe von PVC-haltigen Kunststoffabfällen zu entwickeln, welches die genannten Nachteile entsprechend dem Stand der Technik nicht aufweist, sondern gleichzeitig den Einsatz von PVC-haltigen Kunststoffen als Einsatzmaterialien neben Kalk und den üblichen Schwarzstoffen in größeren Mengen ermöglicht, ohne dass hierbei der Calciumcarbid-Prozess durch größere HCl-Gas-Mengen beeinträchtigt wird.

Diese Aufgabe wurde erfindungsgemäß dadurch gelöst, dass man
a) die PVC-haltigen Kunststoffabfälle im Temperaturbereich von 270 bis 400 °C unter Bildung von HCl-Gas und einem kohlenstoffhaltigen Rückstand thermisch zersetzt und
b) den in Stufe a) gebildeten kohlenstoffhaltigen Rückstand als Schwarzstoff bei der Calciumcarbid-Herstellung einsetzt.

Es hat sich hierbei überraschenderweise gezeigt, dass man auf diese Weise auch PVC-Kunststoffabfälle mit einem relativ hohen Chlorgehalt und gleichzeitig in relativ großen Mengen einsetzen kann, ohne dass es hierbei zu Störungen im Calciumcarbid-Prozess kommt.

Der Ausdruck "Polyvinylchlorid (PVC)", wie er hierin verwendet wird, bezieht sich auf Polymere, die eine (-CH₂-CHCl-)ₙ Gruppierung aufweisen, wobei n eine ganze Zahl größer oder gleich 2, bevorzugt ≥ 5, ≥ 50 oder noch stärker bevorzugt ≥ 100 ist. Solche Polymere können beispielsweise durch Homopolymerisation von Vinylchlorid, durch Copolymerisation von Vinylchlorid mit anderen Monomeren, wie z.B. Ethylen, Vinylacetat, Propen, Acrylnitril, Vinylether, Maleinsäure oder/und Maleinimid, oder/und durch partielle Chlorierung von Polyethylen und Polyethylen-Copolymeren hergestellt werden.

Beim Verfahren entsprechend der vorliegenden Erfindung werden die PVC-haltigen Kunststoffabfälle vor deren Einsatz als Schwarzstoff bei der Calciumcarbid-Herstellung einer thermischen Zersetzung bei 270 bis 400 °C, noch stärker bevorzugt bei 300 bis 400 °C unterworfen, wobei sich HCl-Gas und ein kohlenstoffhaltiger Rückstand bilden. Die PVC-haltigen Kunststoffabfälle können hierbei einen Chlorgehalt von 5 bis 56 Gew.-% und in einer anderen Ausführungsform von 5 bis 56,8 Gew.-%, bevorzugt von 10 bis 56,8 Gew.-%, noch stärker bevorzugt von 10 bis 30 Gew.-% aufweisen und einen Teilchendurchmesser bis 100 mm, insbesondere bis 80 mm, bevorzugt zwischen 5 und 50 mm, stärker bevorzugt zwischen 10 und 50 mm besitzen.

Bevorzugt werden im erfindungsgemäßen Verfahren PVC-haltige Kunststoffabfälle, die gegebenenfalls mit organischen oder anorganischen Substanzen verunreinigt sind, eingesetzt. Bevorzugt werden Kunststoffabfälle aus dem Baubereich, Haus- und Gewerbemüll bezogen. Die Kunststoffabfälle können sortenrein sein, d.h. die Abfälle enthalten nur PVC-Kunststoffe oder können neben PVC auch nicht-chlorhaltige PolymerVerbindungen, wie z. B. Polyethylen, Polypropylen, Polyurethane, Polyacrylnitrile und andere gegebenenfalls chlorhaltige PolymerVerbindungen enthalten.

Die thermische Zersetzung der PVC-haltigen Kunststoffabfälle gemäß Stufe a) kann nach verschiedenen Verfahrensvarianten durchgeführt werden, wobei auf die einschlägigen thermischen Zersetzungsverfahren entsprechend dem Stand der Technik verwiesen wird. Gemäß einer bevorzugten Ausführungsform werden die PVC-haltigen Kunststoffabfälle in einem Ölbad bei 300 bis 400 °C thermisch zersetzt. Die Entchlorung kann in den üblichen Vorrichtungen, wie z. B. Rührkessel etc., vorgenommen werden, in denen das entsprechende hochsiedende Öl, wie z. B. Vakuumschwerdestillat, vorgelegt wird und die PVC-haltigen Kunststoffabfälle zugegeben werden.

Als besonders vorteilhaft hat sich bei dieser Verfahrensvariante erwiesen, dass nach der thermischen Zersetzung der kohlenstoffhaltige Rückstand, beispielsweise in Form von Koks, auf der Oberfläche des Öles schwimmt und deshalb besonders leicht abgezogen werden kann, während die nicht-chlorhaltigen Polymere schmelzen und sich auf dem Behälterboden absetzen, wo sie ebenfalls relativ problemlos abgetrennt werden können. Auf diese Weise ist es ohne Weiteres möglich, die Mengenverhältnisse von Koks und nicht-chlorhaltigen Polymeren beim Einsatz in der Calciumcarbid-Herstellung (Stufe b)) gezielt zu variieren.

Gemäß einer weiteren bevorzugten Verfahrensvariante wird die thermische Zersetzung der PVC-haltigen Kunststoffabfälle in einem Extruder bei 270 bis 400 °C vorgenommen. Vorzugsweise werden als Extruder doppelgängige Schneckenextruder, insbesondere gleichlaufende Doppelschneckenextruder, eingesetzt.

Das bei der thermischen Zersetzung gebildete HCl-haltige Gas wird aus einer oder mehreren Gasabzugsöffnungen entlang der Schnecke abgezogen, während der kohlenstoffhaltige Rückstand ggf. zusammen mit den nicht-chlorhaltigen Polymeren den Extruder über die Auslassmatrize verlässt. Es ist im Rahmen der vorliegenden Erfindung möglich, die Heizzonen des Extruders auf unterschiedliche Temperaturen, beispielsweise mit ansteigendem Temperaturprofil, einzustellen, um auf diese Weise niedrig siedende Komponenten, wie z. B. H₂O-Dampf, oder flüchtige organische Bestandteile, wie z. B. Weichmacher, selektiv abzutrennen.

Der bei thermischer Zersetzung entstehende kohlenstoffhaltige Rückstand, der in der Regel einen Restchlorgehalt von < 10 Gew.-%, insbesondere < 5 Gew.-%, stärker bevorzugt ≤ 4 Gew.-% aufweist, wird dann anschließend ggf. zusammen mit den nicht-chlorhaltigen Polymeren als Schwarzstoff bei der Calciumcarbid-Herstellung (Stufe b)) eingesetzt.

Es ist im Rahmen der vorliegenden Erfindung auch möglich, die Schwermetalle, welche bei der Calciumcarbid-Herstellung teilweise unerwünscht sind, vor oder nach der thermischen Zersetzung der PVC-haltigen Kunststoffabfälle abzutrennen, wobei auf die üblichen Verfahren entsprechend dem Stand der Technik zurückgegriffen werden kann.

Gemäß einer bevorzugten Ausführungsform wird das in Stufe a) gebildete HCl-Gas, welches in der Regel noch organische Verunreinigungen enthält, durch Adsorption mit z. B. Aktivkohle und/oder Wäsche gereinigt und kann anschließend einer Wiederverwertung zugeführt werden, wie z. B. als Rohstoff für die PVC-Herstellung. Alternativ hierzu kann das HCl-Gas nach dessen Reinigung in Form einer wässrigen Salzsäure-Lösung abgetrennt werden, um es auf diese Weise in eine industriell verwertbare Form zu überführen.

Der in Stufe a) gebildete kohlenstoffhaltige Rückstand wird ggf. zusammen mit den nicht-chlorhaltigen Polymeren beim Calciumcarbidprozess (Stufe b)) zusammen mit den üblichen Schwarzstoffen und Kalk als Rohstoff eingesetzt, wobei die entsprechenden Ausgangsmaterialien entweder als Möllerbestandteil eingesetzt und/oder über die Hohlelektrode in den Elektroniederschachtofen eingebracht werden.

Als besonderer Vorteil muss hierbei die Tatsache angesehen werden, dass der in Stufe a) gebildete kohlenstoffhaltige Rückstand in einer solchen Menge eingesetzt werden kann, dass bis zu 70 Gew.-%, vorzugsweise 10 bis 50 Gew.-%, stärker bevorzugt 10 bis 40 Gew.-% der üblichen Schwarzstoffe im Calciumcarbid-Prozess ersetzt werden.

Beim Einsatz des kohlenstoffhaltigen Rückstands sowie den nicht-chlorhaltigen Polymeren aus Stufe a) entstehen in der Regel Abgase, bestehend im Wesentlichen aus Kohlenmonoxid, Wasserstoff, und Methan. Das entsprechende Gasgemisch kann ohne Weiteres stofflich und/oder thermisch verwertet werden. So besteht beispielsweise die Möglichkeit, die entstehenden Gase zur Stromerzeugung einzusetzen, was vorzugsweise mit Hilfe eines Gasmotors, einer Gasturbine und/oder von Hochdruckdampf bewerkstelligt werden kann. So kann beispielsweise das Ofenabgas, welches den Elektroniederschachtofen über den Ofendeckel verlässt, einer Brennkammer zugeführt werden, wo dann das Gasgemisch verbrannt und die Heißgase zur Erzeugung von Hochdruckdampf genutzt werden. Der Hochdruckdampf kann dann ohne Weiteres anschließend über Dampfkondensationsturbinen zur Stromerzeugung herangezogen werden.

Das mit Hilfe des erfindungsgemäßen Verfahrens erzeugte Calciumcarbid entspricht dabei den üblichen Reinheitsanforderungen und kann in einem nachgeschalteten Verfahren zur Erzeugung von Acetylen oder Acetylen-Folgeprodukten oder aber als Rohstoff für die Herstellung von Calciumcyanamid (Kalkstickstoff) eingesetzt werden.

Darüber hinaus eignet sich das nach dem erfindungsgemäßen Verfahren hergestellte Calciumcarbid als Mittel für die Entschwefelung von Roheisenschmelzen.

Das erfindungsgemäße Verfahren zeichnet sich durch eine hohe Wirtschaftlichkeit aus, da relativ kostengünstige PVC-haltige Kunststoffabfälle als Rohstoff eingesetzt werden und gleichzeitig das bei der Thermolyse entstehende HCl-Gas wiederverwertet werden kann.

Darüber hinaus ist das erfindungsgemäße Verfahren ohne großen technischen Aufwand zu realisieren, da die thermische Zersetzung in den üblichen Apparaturen durchgeführt werden kann, so dass diese Vorbehandlungsstufe problemlos in den großtechnischen Calciumcarbid-Prozess integriert werden kann.

Das nachfolgende Beispiel soll die Erfindung näher veranschaulichen.

### Beispiel

Eine Kunststoffabfallfraktion mit 50 Gew.-% PVC-Anteil (Chlorgehalt etwa 28,4 Gew.-%) wird mit einem Durchsatz von 1.600 kg/h über Förderbänder einem gleichlaufenden Doppelschneckenextruder zugeführt.

Der Extruder hat zwei Entgasungsöffnungen und ist mit einem beheizbaren Doppelmantel ausgeführt.

Im ersten Bereich bis zur ersten Entgasungsöffnung wird das Material auf 250 °C aufgeheizt und die entstehenden flüchtigen Bestandteile und das ausgetriebene Wasser an der ersten Entgasungsöffnung abgezogen, anschließend kondensiert und der verbleibende Gasstrom über Aktivkohle gereinigt.

Im zweiten Bereich bis zur zweiten Entgasungsöffnung wird eine Temperatur von 300 bis 340 °C eingestellt. An der Entgasungsöffnung wird das entstehende Gas, das hauptsächlich aus Chlorwasserstoff besteht, abgezogen und anschließend über Aktivkohlefilter aufgereinigt und danach mit Wasser zu Salzsäure ausgewaschen.

Nach der letzten Entgasungsöffnung wird die Temperatur im Extruder auf ca. 250 °C gesenkt. Mit dieser Temperatur gelangt der Rückstand durch eine Matrize aus dem Extruder, wird im Luftstrom abgekühlt, und anschließend zwischengelagert.

Das Extrudat hat einen Restchlorgehalt von ca. 5 Gew.-% und einen Fix-C Gehalt von ca. 25 %. Unter Fix-C Gehalt versteht man denjenigen Kohlenstoffgehalt, der für die Carbidreaktion (siehe unten) zur Verfügung steht.

Die im Wesentlichen entchlorten Extrudate werden mit einem Massenanteil von ca. 15 % einer Standardmöllermischung, was einem Fix-C Ersatz von 12 % entspricht, weitgehend homogenisiert und über die Grobmöllerdosiersysteme einem Elektroniederschachtofen zur Herstellung von Calciumcarbid zugeführt. Dieser Ofen hat eine elektrische Leistung von 20 MWh, was einem Möllerdurchsatz von ca. 240 t/Tag entspricht.

Durch den Einsatz des Extrudates erhöhen sich die Ofengasmenge und der Ofengasheizwert, da das Extrudat mit einem mittleren Fix-C Gehalt von 25 % deutlich unter dem Fix-C Gehalt von fossilen Schwarzstoffen (ca. 89 %) liegt.

## Patentansprüche

1. Verfahren zur technischen Herstellung von Calciumcarbid im Elektroniederschachtofen mit Hilfe von PVC-haltigen Kunststoffabfällen, **dadurch gekennzeichnet, dass** man
a) die PVC-haltigen Kunststoffabfälle im Temperaturbereich von 270 bis 400 °C unter Bildung von HCl-Gas und einem kohlenstoffhaltigen Rückstand thermisch zersetzt
und
b) den in Stufe a) gebildeten kohlenstoffhaltigen Rückstand als Schwarzstoff bei der Calciumcarbid-Herstellung einsetzt.

2. Verfahren nach Anspruch 1, **dadurch gekennzeichnet, dass** die PVC-haltigen Kunststoffabfälle einen Chlorgehalt von 5 bis 56,8 Gew.-% aufweisen.

3. Verfahren nach Anspruch 1 oder 2, **dadurch gekennzeichnet, dass** man die thermische Zersetzung mit Hilfe eines Ölbads bei 300 bis 400 °C durchführt.

4. Verfahren nach Anspruch 1 oder 2, **dadurch gekennzeichnet, dass** man die PVC-haltigen Kunststoffabfälle im Extruder im Temperaturbereich von 270 bis 400 °C thermisch zersetzt.

5. Verfahren nach Anspruch 4, **dadurch gekennzeichnet, dass** man für die thermische Zersetzung der PVC-haltigen Kunststoffabfälle in einem Doppelschneckenextruder vornimmt.

6. Verfahren nach einem der Ansprüche 1 bis 5, **dadurch gekennzeichnet, dass** die PVC-haltigen Kunststoffabfälle einen Teilchendurchmesser bis 100 mm, insbesondere bis 80 mm und besonders bevorzugt zwischen 5 und 50 mm, besitzen.

7. Verfahren nach einem der Ansprüche 1 bis 6, **dadurch gekennzeichnet, dass** man die Schwermetalle aus den PVC-haltigen Kunststoffabfällen vor oder nach der thermischen Zersetzung (Stufe a)) entfernt.

8. Verfahren nach einem der Ansprüche 1 bis 7, **dadurch gekennzeichnet, dass** man das HCl-Gas durch Adsorption und/oder Wäsche reinigt und anschließend wiederverwertet.

9. Verfahren nach einem der Ansprüche 1 bis 8, **dadurch gekennzeichnet, dass** man das HCl-Gas nach dessen Reinigung in Form einer wässrigen Salzsäure-Lösung abtrennt.

10. Verfahren nach einem der Ansprüche 1 bis 9, **dadurch gekennzeichnet, dass** der in Stufe a) gebildete kohlenstoffhaltige Rückstand einen Restchlorgehalt von < 10 Gew.%, insbesondere < 5 Gew.%, aufweist.

11. Verfahren nach einem der Ansprüche 1 bis 10, **dadurch gekennzeichnet, dass** der in Stufe a) gebildete kohlenstoffhaltige Rückstand in Stufe b) als Möllerbestandteil eingesetzt und/oder über die Hohlelektrode eingebracht wird.

12. Verfahren nach einem der Ansprüche 1 bis 11, **dadurch gekennzeichnet, dass** man den in Stufe a) gebildeten kohlenstoffhaltigen Rückstand in Stufe b) in einer solchen Menge einsetzt, dass bis zu 70 %, vorzugsweise 10 bis 50 % der üblichen Schwarzstoffe ersetzt werden.

13. Verfahren nach einem der Ansprüche 1 bis 12, **dadurch gekennzeichnet, dass** man die in Stufe b) entstehenden Abgase, im Wesentlichen bestehend aus Kohlenmonoxid, Wasserstoff, und Methan, stofflich und/oder thermisch verwertet.

14. Verfahren nach einem der Ansprüche 1 bis 13, **dadurch gekennzeichnet, dass** man das in Stufe b) erzeugte Calciumcarbid in einem nachgeschalteten Verfahren zur Erzeugung von Acetylen einsetzt.

15. Verfahren nach einem der Ansprüche 1 bis 13, **dadurch gekennzeichnet, dass** man das in Stufe b) erzeugte Calciumcarbid als Rohstoff für die Herstellung von Calciumcyanamid verwendet.

16. Verfahren nach einem der Ansprüche 1 bis 13, **dadurch gekennzeichnet, dass** man das in Stufe b) erzeugte Calciumcarbid als Mittel für die Entschwefelung von Roheisenschmelzen einsetzt.

## Claims

1. Method for the industrial production of calcium carbide in an electric low-shaft furnace using PVC-containing plastics material waste, **characterised in that**
a) the PVC-containing plastics material waste is thermally decomposed in a temperature range of from 270 °C to 400 °C with formation of HCl gas and a residue containing carbon
and
b) the residue containing carbon formed in step a) is used as coke in the production of calcium carbide.

2. Method according to claim 1, **characterised in that** the PVC-containing plastics material waste has a chlorine content of from 5 % to 56.8 % by weight.

3. Method according to either claim 1 or claim 2, **characterised in that** the thermal decomposition is carried out at 300 °C to 400 °C using an oil bath.

4. Method according to either claim 1 or claim 2, **characterised in that** the PVC-containing plastics material waste is thermally decomposed in the extruder in a temperature range of from 270 °C to 400 °C.

5. Method according to claim 4, **characterised in that** the thermal decomposition of the PVC-containing plastics material waste is carried out in a twin screw extruder.

6. Method according to any of claims 1 to 5, **characterised in that** the PVC-containing plastics material waste has a particle diameter of up to 100 nm, more particularly of up to 80 nm and particularly preferably of between 5 nm and 50 nm.

7. Method according to any of claims 1 to 6, **characterised in that** the heavy metals are removed from the PVC-containing plastics material waste before or after thermal decomposition (step a)).

8. Method according to any of claims 1 to 7, **characterised in that** the HCl gas is cleaned by adsorption and/or washing and then recycled.

9. Method according to any of claims 1 to 8, **characterised in that** after the cleaning thereof, the HCl gas is separated into the form of an aqueous hydrochloric acid solution.

10. Method according to any of claims 1 to 9, **characterised in that** the residue containing carbon formed in step a) has a residual chlorine content of < 10 % by weight, more particularly < 5 % by weight.

11. Method according to any of claims 1 to 10, **characterised in that** the residue containing carbon formed in step a) is used in step b) as a burden constituent and/or introduced by the hollow electrodes.

12. Method according to any of claims 1 to 11, **characterised in that** the residue containing carbon formed in step a) is used in step b) in a quantity such that up to 70 %, preferably 10 % to 50 %, of the conventional cokes is replaced.

13. Method according to any of claims 1 to 12, **characterised in that** the combustion gases which develop in step b), substantially consisting of carbon monoxide, hydrogen and methane, are materially and/or thermally utilised.

14. Method according to any of claims 1 to 13, **characterised in that** the calcium carbide produced in step b) is used in a subsequent method for producing acetylene.

15. Method according to any of claims 1 to 13, **characterised in that** the calcium carbide produced in step b) is used as a raw material for the production of calcium cyanamide.

16. Method according to any of claims 1 to 13, **characterised in that** the calcium carbide produced in step b) is used as a means for desulphurising molten pig iron.

## Revendications

1. Procédé de fabrication industrielle de carbure de calcium dans des fours électriques à cuve basse à l'aide de déchets de matières plastiques contenant du PVC, **caractérisé en ce que** l'on
a) décompose par voie thermique les déchets de matières plastiques contenant du PVC, dans l'intervalle de température compris entre 270 et 400 °C, avec formation de gaz HCl et d'un résidu carboné et
b) utilise le résidu carboné formé au cours de l'étape a) comme matière carbonée dans la fabrication du carbure de calcium.

2. Procédé selon la revendication 1, **caractérisé en ce que** les déchets de matières plastiques contenant du PVC présentent une teneur en chlore comprise entre 5 et 56,8 % en poids.

3. Procédé selon la revendication 1 ou 2, **caractérisé en ce que** l'on réalise la décomposition thermique à l'aide d'un bain d'huile entre 300 et 400 °C.

4. Procédé selon la revendication 1 ou 2, **caractérisé en ce que** l'on décompose les déchets de matières plastiques contenant du PVC par voie thermique, dans une extrudeuse, dans l'intervalle de température compris entre 270 et 400 °C.

5. Procédé selon la revendication 4, **caractérisé en ce que** l'on procède à la décomposition thermique des déchets de matières plastiques contenant du PVC dans une extrudeuse double vis.

6. Procédé selon l'une des revendications 1 à 5, **caractérisé en ce que** les déchets de matières plastiques contenant du PVC possèdent un diamètre de particules allant jusqu'à 100 mm, en particulier jusqu'à 80 mm et avec une préférence particulière, compris entre 5 et 50 mm.

7. Procédé selon l'une des revendications 1 à 6, **caractérisé en ce que** l'on élimine les métaux lourds des déchets de matières plastiques contenant du PVC, avant ou après la décomposition thermique (étape a)).

8. Procédé selon l'une des revendications 1 à 7, **caractérisé en ce que** l'on purifie le gaz HCl par adsorption et/ou lavage, et que l'on recycle ensuite celui-ci.

9. Procédé selon l'une des revendications 1 à 8, **caractérisé en ce que** l'on sépare le gaz HCl après sa purification, sous la forme d'une solution aqueuse d'acide chlorhydrique.

10. Procédé selon l'une des revendications 1 à 9, **caractérisé en ce que** le résidu carboné formé au cours de l'étape a) présente une teneur résiduelle en chlore inférieure à 10 % en poids, en particulier inférieure à 5 % en poids.

11. Procédé selon l'une des revendications 1 à 10, **caractérisé en ce que** le résidu carboné formé au cours de l'étape a) est mis en oeuvre dans l'étape b) comme constituant de lit de fusion et/ou introduit via l'électrode creuse.

12. Procédé selon l'une des revendications 1 à 11, **caractérisé en ce que** l'on met en oeuvre dans l'étape b) le résidu carboné formé au cours de l'étape a), dans une proportion telle que jusqu'à 70 %, de préférence entre 10 et 50 % des matières noires usuelles sont remplacés.

13. Procédé selon l'une des revendications 1 à 12, **caractérisé en ce que** l'on utilise en tant que matières et/ou sur le plan thermique les gaz d'échappement formés au cours de l'étape b), qui se composent essentiellement de monoxyde de carbone, d'hydrogène et de méthane.

14. Procédé selon l'une des revendications 1 à 13, **caractérisé en ce que** l'on utilise le carbure de calcium fabriqué au cours de l'étape b) dans un procédé de production d'acétylène intercalé à la suite.

15. Procédé selon l'une des revendications 1 à 13, **caractérisé en ce que** l'on utilise le carbure de calcium fabriqué au cours de l'étape b) comme matière première pour la production de cyanamide de calcium.

16. Procédé selon l'une des revendications 1 à 13, **caractérisé en ce que** l'on utilise le carbure de calcium fabriqué au cours de l'étape b) comme agent pour la désulfuration de masses fondues en fonte.
